(19) **Europäisches Patentamt / European Patent Office / Office européen des brevets**

(11) **EP 2 913 688 A1**

(12) **EUROPEAN PATENT APPLICATION**

(43) Date of publication:
02.09.2015 Bulletin 2015/36

(51) Int Cl.:
*G01S 1/70* (2006.01)    *G01S 5/16* (2006.01)
*G08G 5/02* (2006.01)

(21) Application number: 14305269.4

(22) Date of filing: 26.02.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Université de Rennes 1**
**35065 Rennes (FR)**
• **CENTRE NATIONAL DE LA RECHERCHE SCIENTIFIQUE -CNRS-**
**75016 Paris (FR)**
• **Raman Research Institute**
**Karnataka (IN)**

(72) Inventors:
• **Alouini, Mehdi**
**35140 Gosne (FR)**
• **Fade, Julien**
**35132 Vezin Le Coquet (FR)**
• **Bretenaker, Fabien**
**78140 Velizy-Villacoublay (FR)**
• **Ramachandran, Hema**
**560032 Bangalore (IN)**

(74) Representative: **Maillet, Alain**
**Cabinet Le Guen Maillet**
**5, place Newquay**
**B.P. 70250**
**35802 Dinard Cedex (FR)**

(54) **System and method for navigation assistance in a scattering environment**

(57)    For performing navigation assistance in a scattering environment, a system is intended to detect at least one navigational light marker in scenes captured by an image capturing device, each navigational light marker generating a light beam having a predefined polarization state. The system includes an image capturing device that is adapted for: capturing a first image of a scene, said first image being polarized in accordance with the predefined polarization state of the light beam generated by said navigational light marker(s); capturing a second image of the scene, said second image being polarized according to a polarization state orthogonal to the polarization state of the first image; generating a polarimetric contrast image by combining the first and second captured images; and providing a feedback for performing navigation assistance in the scattering environment, on the basis of the generated polarimetric contrast image.

Activating at least one navigational light marker generating a fully polarized light beam having a predefined polarization state — 2.1

Capturing a first image of a scene in a scattering environment, said first image being polarized according to said predefined polarization state — 2.2

Capturing a second image of the scene in the scattering environment, said second image being polarized according to a polarization state orthogonal to said predefined polarization state — 2.3

Generating a polarimetric contrast image by combining the first and second images — 2.4

Generating a feedback representative of the presence or absence of the navigational light marker(s) in the scene — 2.5

Fig. 2

EP 2 913 688 A1

Printed by Jouve, 75001 PARIS (FR)

## Description

The present invention generally relates to performing navigation assistance in a scattering environment.

Visibility in scattering environment, such as in presence of fog or haze, is a key issue in the context of air navigation, road navigation or shipping. Indeed, under such scattering circumstances, it might be difficult for a driver or a pilot to locate particular elements of his or her surrounding environment. According to a first example, it might be difficult for an aircraft pilot to locate a particular landing area. According to a second example, it might be difficult for a ship captain to locate coast boundaries or to locate another ship. According to a third example, it might be difficult for a car driver to locate particular road elements, such as roadwork areas, dangerous bends or speed bumpers.

In the particular example of aircraft landing, Instrument Landing Systems (ILS) have been developed to assist the aircraft pilot during final approach and landing operations. Instrument Landing Systems typically rely on transmitting from the landing area radiofrequency (RF) signals, which are intended to be demodulated by an on-board device in order to provide runway alignment, approaching slope and runway distance indications. In most cases, Instrument Landing Systems are coupled with Approach Light Systems (ALS), which consists in placing light navigational markers in the landing area. The minimal Runway Visual Range (RVR, which is representative of the visibility distance of the runway from the pilot's standpoint) depends on the type of Instrument Landing System implemented on the landing area and on-board the aircraft. It should then be noticed that Instrument Landing Systems are complex and costly solutions to perform landing assistance. Illustratively, the American Federal Aviation Administration reports that, at the present time, only less than 16% of the public landing fields in the United States are equipped with Instrument Landing Systems. Not all aircrafts and airports are therefore equipped with high-end Instrument Landing Systems, which means that the corresponding minimal Runway Visual Range may not be met in scattering environments, such as in presence of fog. It results in numerous aircrafts being deviated in order to enable landing, in better visibility conditions, on another landing field.

It is desirable to overcome the aforementioned problems of the prior art.

It is more particularly desirable to provide a solution that allows providing navigation assistance in a scattering environment, such as in fog or haze conditions.

It is also to provide a solution that can meet real-time processing constraints.

In particular, it is desirable to provide an alternative solution to RF-based Instrument Landing Systems. It is furthermore desirable to provide an alternative solution to Visual Approach Slope Indicator (VASI) and Precision Approach Path Indicator (PAPI).

It is furthermore desirable to provide a solution that is cost-effective.

It is furthermore desirable to provide a solution that is simple to implement.

To that end, the present invention concerns a system for performing navigation assistance in a scattering environment, said system being intended to detect at least one navigational light marker in scenes captured by an image capturing device, each navigational light marker generating a light beam having a predefined polarization state. The system includes an image capturing device that implements: means for capturing a first image of a scene, said first image being polarized in accordance with the predefined polarization state of the light beam generated by said navigational light marker(s); means for capturing a second image of the scene, said second image being polarized according to a polarization state orthogonal to the polarization state of the first image; means for generating a polarimetric contrast image by combining the first and second captured images; and means for providing a feedback for performing navigation assistance in the scattering environment, on the basis of the generated polarimetric contrast image. Thus, by generating said polarimetric image, the presence of at least one navigational light marker in the captured scene is highlighted in order to provide navigation assistance, even though a scattering environment (fog, haze,...) surrounds said navigational light marker(s). It is moreover a simple-to-implement and cost-effective alternative solution to RF-based Instrument Landing Systems.

According to a particular feature, said image capturing device includes: first and second converging lenses adapted to re-collimate a light beam; a beam-splitting polarizer adapted to split the re-collimated light beam into two resulting beams, a first resulting beam being polarized in accordance with the predefined polarization state of the light beam generated by said navigational light marker(s) and the second resulting beam being polarized according to a polarization state orthogonal to the polarization state of the first resulting beam; and one or two image sensors adapted to image the first and second resulting beams. Thus, the first and second images can be simultaneously captured, which simplifies image processing and improves processing latency. Real-time constraints can therefore be easily met.

According to a particular feature, said image capturing device includes one image sensor and further includes a third converging lens adapted to enable imaging the first and second resulting beams on a single image sensor. Thus, the solution is even more cost-effective.

According to a particular feature, the first and second converging lenses being adapted to form an image in a first image plane, said image capturing device includes a field mask in said first image plane. Thus, overlap of the first and second images on the image sensor is avoided.

According to a particular feature, said image capturing device further includes, upstream of the first and second converging lenses, a filter adapted to limit the light beam input to the image acquiring device to a spectrum band substantially matching the spectrum band of the light beam emitted by the navigational light marker(s). Thus, the contribution of the ambient light (emphasized by the scattering environment) is reduced when capturing the first and second images, and the influence of the dispersion inherent in the beam-splitting polarizer is also reduced when capturing the first and second images, thus simplifying image processing and improving image quality.

According to a particular feature, the light beam generated by the navigational light marker(s) being circularly polarized, said image capturing device further includes, upstream of the beam-splitting polarizer, a quarter-wave plate with fast and slow axes oriented at 45 degrees from splitting directions of the beam-splitting polarizer. Thus, polarization analysis is performed along two orthogonal circular polarizations. Using circular polarizations simplifies the alignment of the image acquiring device with the polarization of the light beam generated by the navigational light marker(s).

According to a particular feature, said means for providing the feedback includes means for displaying the generated polarimetric contrast image. Thus, the displayed image provides a better view of the scene, through the scattering environment, than human sight.

According to a particular feature, said means for providing the feedback include: means for comparing an intensity of each pixel of the generated polarimetric contrast image with a predetermined threshold; means for generating another image in which each pixel has an intensity representative of whether the absolute value of the intensity of the same pixel in the polarimetric contrast image is above, or not, said predetermined threshold; and means for displaying said generated another image. Thus, focus on the navigational light marker(s) position in the scene is provided.

According to a particular feature, said means for providing the feedback includes: means for applying a sliding window onto the generated polarimetric contrast image to detect pixels or groups of pixels that probably correspond to the presence of at least one navigational light marker in the scene; means for determining a trust level representative of the probability that said pixels or groups of pixels effectively correspond to the presence of at least one navigational light marker in the scene; and means for generating another image, by highlighting each pixel in association with its corresponding trust level, when said trust level is above a predetermined threshold. Thus, decision making by a pilot or a driver using the navigation assistance is simplified.

According to a particular feature, the image capturing device is adapted to successively capture several times the first image and successively capture several times the second image, and to consequently generate a time-sequence plurality of polarimetric contrast images from the plurality of captured first images and from the plurality of captured second images, and wherein the image acquiring device further includes: means for detecting bright pixels isolated in the time-sequence plurality of polarimetric contrast images; means for obtaining one polarimetric contrast image from said plurality of polarimetric contrast images; and means for replacing in the obtained polarimetric contrast image the isolated bright pixels, if any, by dummy pixels. Indeed, said isolated bright pixels being due to particular realizations of noise in the first and second captured images. Thus, noise and probability of false detection of navigational light markers are reduced.

According to a particular feature, combining the first and second captured images corresponds to subtracting an intensity of each pixel in the second image from an intensity of the corresponding pixel in the first image. Thus, generating the polarimetric contrast image is simple and effective.

According to a particular feature, combining the first and second captured images corresponds to subtracting an intensity of each pixel in the second image from an intensity of the corresponding pixel in the first image, the whole being then divided by the sum of the intensity of said pixel in the second image and the intensity of said corresponding pixel in the first image. Thus, generating the polarimetric contrast image is simple.

According to a particular feature, said system being adapted for aircraft landing assistance with at least four coplanar navigational light markers not aligned by three and having predefined positions, said means for providing a feedback are adapted to provide information about altitude and/or azimuth and/or approach slope, by implementing: means for selecting pixels or groups of pixels corresponding, in the polarimetric contrast image, to four navigational light markers; and means for determining said information about altitude and/or azimuth and/or approach slope on the basis of the positions of the selected pixels or groups of pixels in the polarimetric contrast image and on the basis of the predefined positions of the corresponding navigational light markers. Thus, additional landing assistance parameters can be provided (altitude and/or azimuth and/or approach slope) at low cost.

According to a particular feature, said system being adapted for aircraft landing assistance, said system further comprising said navigational light marker(s), said navigational light marker(s) are adapted to generate a light beam having a first sector polarized according to the predefined polarization state and a second sector polarized orthogonally to the first sector, and said means for providing the feedback are adapted to provide an approach slope information on the basis of a sign of the intensity of the pixels of the polarimetric contrast image. Thus, an alternative solution to Visual Approach Slope Indicator (VASI) and Precision Approach Path Indicator (PAPI) is provided, which provides better results in a scattering environment.

The present invention also concerns a method for performing navigation assistance in a scattering environment, at least one navigational light marker generating a light beam having a predefined polarization state, an image capturing device adapted to detect said navigational light marker(s) in scenes captured by said image capturing device performs: capturing a first image of a scene, said first image being polarized in accordance with the predefined polarization state of the light beam generated by said navigational light marker(s); capturing a second image of the scene, said second image being polarized according to a polarization state orthogonal to the polarization state of the first image; generating a polarimetric contrast image by combining the first and second captured images; and providing a feedback for performing navigation assistance in the scattering environment, on the basis of the generated polarimetric contrast image.

The characteristics of the invention will emerge more clearly from a reading of the following description of an example of embodiment, said description being produced with reference to the accompanying drawings, among which:

Fig. 1 schematically represents a context in which the present invention may be implemented;
Fig. 2 schematically represents an algorithm for performing navigation assistance, according to at least one embodiment of the present invention;
Fig. 3 schematically represents an arrangement of an image acquiring device, according to at least one embodiment of the present invention;
Fig. 4A schematically represents an arrangement of a navigational light marker, in a particular embodiment of the present invention;
Fig. 4B schematically represents an arrangement of prior art navigational light markers, for providing approach slope indications.

The present invention is hereinafter detailed mainly with regard to a context of aircraft landing assistance. It should however be understood that the present invention applies to other types of navigation assistance in scattering environments, such as car driving assistance or ship sailing assistance.

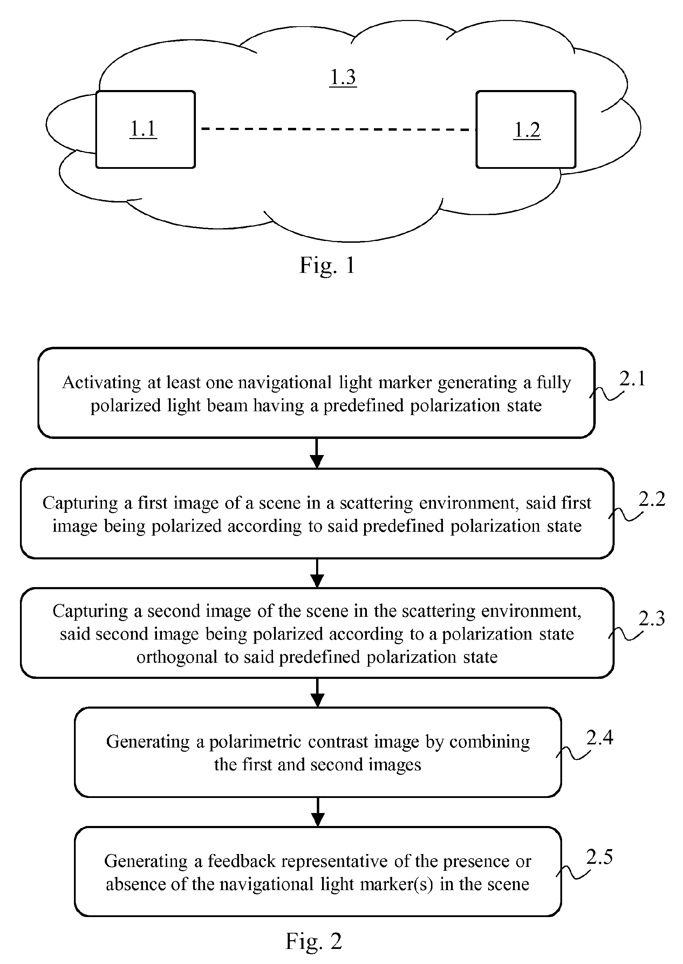

**Fig. 1** schematically represents a context in which the present invention may be implemented. The context illustrated on Fig. 1 includes at least one navigational light marker 1.1 and an image acquiring device 1.2. The navigational light marker 1.1 and the image acquiring device 1.2 are intended to be used in a scattering environment 1.3, such as in presence of fog or haze. Such a scattering environment disturbs light propagation, which significantly decreases visibility of the navigational light marker(s) 1.1 from the image acquiring device 1.2. More generally, the scattering environment 1.3 decreases visibility of the navigational light marker(s) 1.1 from a conveying apparatus, such as a ship or an aircraft, embedding the image acquiring device 1.2.

In order to overcome this visibility issue, it is proposed to arrange the navigational light marker(s) 1.1 such that each navigational light marker 1.1 generates a fully polarized light beam having a predefined polarization state. It is further proposed to arrange the image acquiring device 1.2 such that said image acquiring device 1.2 acquires first and second images of a scene in the scattering environment 1.3, said first image being polarized according to said predefined polarization state and said second image being polarized according to a polarization state that is orthogonal to said predefined polarization state. By combining the first and second acquired images in order to generate a polarimetric contrast image, the image acquiring device 1.2 is able to provide a feedback representative of the presence or absence of the navigational light marker(s) 1.1 in the captured scene.

Only some photons of the fully polarized light beam generated by the navigational light marker(s) 1.1 reach the image acquiring device 1.2 without being altered by the scattering environment 1.3. Such photons are often referred to as *ballistic photons.* However, as the light beam generated by the navigational light marker(s) 1.1 is fully polarized, it means that the ballistic photons present a specific signature allowing the image acquiring device 1.2 to distinguish said ballistic photons among a wide plurality of non-polarized photons resulting from a scattering of the ambient light by the scattering environment 1.3. Said wide plurality of non-polarized photons may result from the sun light or from urban night lighting systems, and creates a noisy background decreasing the overall visibility in the presence of the scattering environment 1.3. As a consequence, said wide plurality of non-polarized photons has a negligible contribution to the polarimetric contrast image generated by the image acquiring device 1.2, compared to the contribution of the ballistic photons, which have the predefined polarization state. Identifying the navigational light marker(s) 1.1, and consequently the actual position of the navigational light marker(s) 1.1, in the captured scene is thus enhanced.

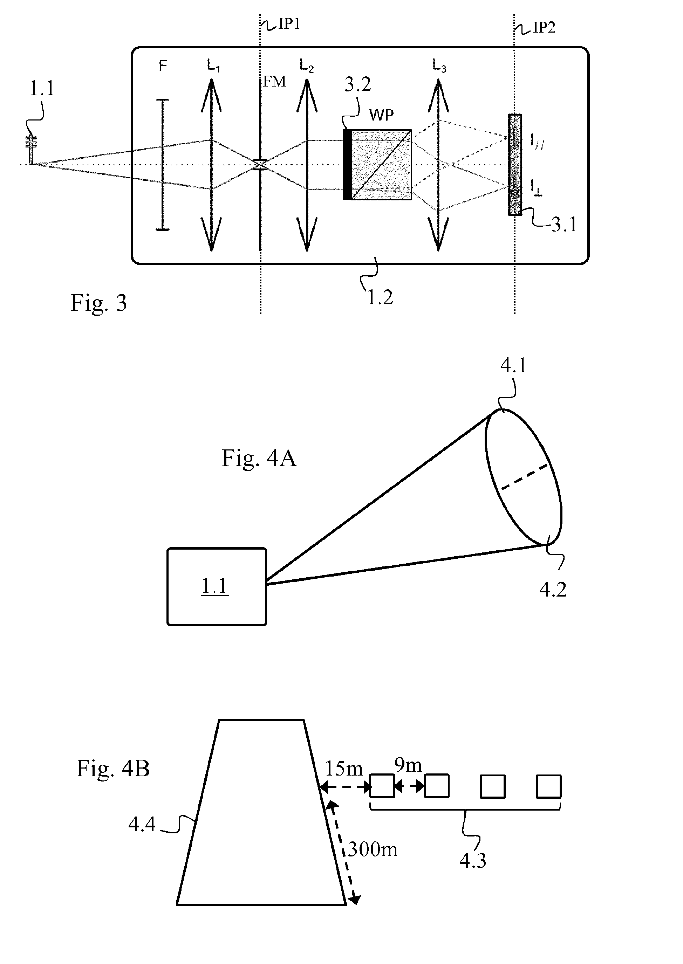

A particular embodiment of the image acquiring device 1.2, allowing simultaneously capturing the first and second images is detailed hereafter with regard to Fig. 3 .

The navigational light marker(s) 1.1 may consist of a light source, such as a spot, and a polarizing filter adapted to convert non-polarized, or partially polarized, light beam generated by the light source into fully polarized light beam, with a predefined polarization state. Such an arrangement of the navigational light marker(s) 1.1 may be enhanced by adding reflectors around the light source equipped with the polarizing filter, such that the light beam be concentrated toward one propagation direction. In a context of aircraft landing assistance, such reflectors would allow propagating the light beam of the navigational light marker(s) 1.1 in a manner aligned with the runway of the landing field. Still in a context of aircraft landing assistance, using the arrangement including the light source and the polarizing filter would allow an easy retrofit of the actual landing fields, as it would simply require adding said polarizing filter in the form of a thin film on top of spots already installed on field.

Moreover, the navigational light marker(s) 1.1 may be adapted such that the emitted light beam is reduced to a predetermined narrow band of the light spectrum, in order to reduce the presence of interfering lighting and/or to reduce light scattering and light absorption by the scattering environment 1.3. For instance, using lights in the red or infrared spectrum domain would allow preserving the health of the eye of a human operator (such as a car driver, a ship captain or an aircraft pilot).

Said predefined polarization state of the light beam emitted by the navigational light marker(s) 1.1 is for instance vertically linear or circular. Linear polarization state is easy-to-implement, as such polarizers and compatible polarizing beam-splitters are widely available off-the-shelf. In the context of aircraft landing assistance, this would however require that the image acquiring device 1.2 be installed in a mechanical arrangement, for instance relying on a gyroscope or on indications from an Attitude and Heading Reference System (AHRS), for compensating the aircraft tilt in order to ensure alignment of the image acquiring device 1.2 with the direction of polarization of the light beam emitted by the navigational light marker(s) 1.1. A circular polarization state would provide more efficient results in a context of aircraft landing assistance, as the circular polarization state would not necessitate compensating the aircraft tilt. Circular polarization state can be implemented using a commercially available circular polarizing filter or a combination of a linearly polarizing filter followed by an appropriately positioned quarter-wave plate or optical retarder filter.

In a particular embodiment, detailed hereafter with regard to Fig. 4A, the navigational light marker(s) 1.1 may be adapted to generate a light beam, part of which being polarized in a predefined polarization state and another part of which being polarized in a polarization state orthogonal to said predefined polarization state.

**Fig. 2** schematically represents an algorithm for performing navigation assistance, according to at least one embodiment of the present invention.

In a step 2.1, a human operator or a controller device activates the navigational light marker(s) 1.1. Each navigational light marker 1.1 thus generates a fully polarized light beam having a predefined polarization state. Considering a particular embodiment of the present invention in a context of aircraft landing assistance, the navigational light marker(s) 1.1 delimitate a runway of a landing field.

In a step 2.2, the image acquiring device 1.2 captures a first image of a scene in the scattering environment 1.3, said first image being polarized in accordance with the predefined polarization state of the light beam generated by said navigational light marker(s) 1.1.

In a step 2.3, the image acquiring device 1.2 captures a second image of the scene in the scattering environment 1.3, said second image being polarized according to a polarization state orthogonal to the polarization state of the first image.

The first and second images may be sequentially captured by a single detector implemented in the image acquiring device 1.2 using a polarizing filter fixed on a rotating mount, or an electrically-controlled liquid-crystal-based polarization analysing system, placed in front of the detector. In this case, in order to adequately combine the first and second images, the latency between capturing the first image and capturing the second image shall be negligible, so that it can be considered that a same scene is captured by the image acquiring device 1.2 for the first and second images.

The first and second images are preferably simultaneously captured by the image acquiring device 1.2. A preferred embodiment is detailed hereafter with regard to Fig. 3. Other arrangements may be implemented instead, for instance by using a different kind of beam-splitting polarizer in lieu of a Wollaston prism. For instance, a Nicol prism may be implemented. The beam-splitting polarizer thus splits incident light beam into two distinct beams with orthogonal polarization states, in order to enable imaging on two distinct image sensors, whereas a Wollaston prism allows capturing the first and second images with a single image sensor in an easy-to-implement manner.

In a step 2.4, the image acquiring device 1.2 generates a polarimetric contrast image by combining the first and second acquired images, such that the polarized light emitted by the navigational light marker(s) 1.1 is emphasized while the non-polarized light of other structural elements of the scene is attenuated.

According to a first embodiment, the image acquiring device 1.2 performs a linear combination of the first and second image. According to a particular embodiment, the image acquiring device 1.2 subtracts the intensity, e.g. via gray level, of each pixel of the second image from the intensity, e.g. via gray level, of each corresponding pixel of the first image. As a general representation, this combination may be expressed as follows:

$$I_\Delta = I_{//} - I_\perp$$

wherein $I_\Delta$ represents the polarimetric contrast image obtained by difference of the first image $I_{//}$ and the second image $I_\perp$.

According to a second embodiment, the image acquiring device 1.2 performs an OSC (Orthogonal State Contrast) combination of the first and second image, which may be expressed as follows:

$$I_{OSC} = \left(I_{//} - I_\perp\right)/\left(I_{//} + I_\perp\right)$$

wherein $I_{OSC}$ represents the orthogonal state contrast image obtained from the first image $I_{//}$ and the second image $I_{\perp}$. In other words, the image acquiring device 1.2 subtracts the intensity, e.g. via gray level, of each pixel of the second image from the intensity, e.g. via gray level, of each corresponding pixel of the first image, and divides the result by the sum of the intensity of said pixel of the second image and the intensity of said corresponding pixel of the first image.

As a preferred embodiment, the image acquiring device 1.2 generates the aforementioned image $I_{\Delta}$. Indeed, as the ambient light is not polarized, its contributions to the first image $I_{//}$ and to the second image $I_{\perp}$ are roughly identical and are therefore substantially cancelled by the difference $I_{//} - I_{\perp}$.

In a step 2.5, the image acquiring device 1.2 generates, on the basis of the polarimetric contrast image, a feedback representative of the presence or of the absence of the navigational light marker(s) 1.1 in the captured scene.

According to a first embodiment, the image acquiring device 1.2 displays, for instance on an LCD (*Liquid Crystal Display*) screen, the polarimetric contrast image as generated in the step 2.4.

According to a second embodiment, the image acquiring device 1.2 compares the absolute value of the intensity, e.g. via gray level, of each pixel of the polarimetric contrast image with a predetermined threshold. When the absolute value of the intensity of a pixel is above said predetermined threshold, the image acquiring device 1.2 considers that said pixel corresponds to the light emitted by the navigational light marker(s) 1.1; and, otherwise, the image acquiring device 1.2 considers that said pixel corresponds to light emitted by an environmental element. Then, the image acquiring device 1.2 generates another image, wherein each pixel has an intensity representative of whether the absolute value of the intensity of the same pixel in the polarimetric contrast image is above, or not, said predetermined threshold. Then, the image acquiring device 1.2 displays, for instance on an LCD screen, said another image.

According to a third embodiment, the image acquiring device 1.2 generates yet another image wherein pixels or groups of pixels that seem to correspond, in the polarimetric contrast image, to the navigational light marker(s) 1.1 are represented in association with a trust level. The trust level may be indicated using a colour code. Usually, to detect an element on an image, a sliding window is used over the considered image. Statistical analysis of the group of pixels in the sliding window is performed at each iteration, e.g. intensity histogram, and is then compared with at least one known model of the element to be found. The trust level computed by the image acquiring device 1.2 is then representative of the distance, *i.e.* the difference level, between the group of pixels considered by the actual position of the sliding window and said model. When the trust level for one pixel or a group of adjacent pixels is above a predetermined threshold, the image acquiring device 1.2 considers it is probable that the navigational light marker(s) 1.1 be found, and therefore highlight in said yet another image said pixel(s) in association with the corresponding trust level.

According to a particular embodiment of the present invention, the image acquiring device 1.2 successively captures several times the first image and successively captures several times the second image. The image acquiring device 1.2 then performs a smoothing operation on the plurality of captured first images and on the plurality of captured second images, in order to attempt removing artefacts due to capture noise. The image acquiring device 1.2 consequently generates a time-sequence plurality of polarimetric contrast images from the plurality of captured first images and from the plurality of captured second images. The image acquiring device 1.2 detects bright pixels, isolated in the time-sequence plurality of polarimetric contrast images, showing an abrupt variation of intensity on only one or few images of the plurality of polarimetric contrast images. The image acquiring device 1.2 then obtaining one polarimetric contrast image from said plurality of polarimetric contrast images, e.g. arbitrarily selecting one image or generating an average of the images, and replaces the isolated pixels by dummy pixels, for instance black pixels or pixels having an intensity computed as an average of the intensity of their neighbouring pixels in the plurality of polarimetric contrast images.

According to a particular embodiment of the present invention, in the context of aircraft landing assistance, the image acquiring device 1.2 may further provide, in the step 2.5, feedback information about altitude and/or azimuth and/or approach slope. To do so, the image acquiring device 1.2 selects pixels or groups of pixels that correspond, in the polarimetric contrast image, to four navigational light markers. Assuming that the navigational light markers are coplanar, at predefined positions and not aligned by three, the coordinates of the image acquiring device 1.2 compared to a fixed reference on the runway can be determined, from which the image acquiring device 1.2 is able to derive altitude and/or azimuth and/or approach slope parameters. A method for determining said coordinates is detailed in the document "Random Sample Consensus: A Paradigm for Model Fitting with Applications to Image Analysis and Automated Cartography ", M.A. Fischler and R.C. Bolles, Comm. Of the ACM, 1981, Vol. 24, Num. 6, pp.381-395.

Capturing the first and second images in the respective steps 2.2 and 2.3, generating the polarimetric contrast image in the step 2.4, generating the feedback in the step 2.5 and performing any post-processing of the polarimetric contrast image may be controlled by software, by execution of a set of instructions or program by a programmable computing machine, such as a Digital Signal Processor (DSP) or a microcontroller, or else controlled by hardware by a machine or a dedicated component, such as a Field-Programmable Gate Array (FPGA) or an Application-Specific Integrated Circuit (ASIC). In a software implementation, the image acquiring device 1.2 further comprises a processor, a Read-Only Memory (ROM), a Random Access Memory (RAM), and an Hard Disk Drive (HDD) or any other device adapted to read information stored on storage means, such as a Secure Digital (SD) card reader. The processor is capable of executing instructions loaded into RAM from ROM, from an external memory such as an SD card, or from HDD. After the image acquiring device 1.2 has been powered on, the processor is capable of reading instructions from RAM and executing these instructions. The instructions form one computer program that causes the processor to perform some or all of the aforementioned steps.

Fig. 3 schematically represents an arrangement of the image acquiring device 1.2, according to at least one embodiment of the present invention.

The image acquiring device 1.2 includes first L1 and second L2 converging lenses adapted to form an image in a first image plane IP1 and to re-collimate a light beam received by the image acquiring device 1.2, such as the light beam coming from the scene captured in the steps 2.2 and 2.3.

The image acquiring device 1.2 further includes a Wollaston prism WP adapted to split the collimated light beam into two distinct light beams, a first light beam being constituted by the photons having the same polarization state as the light beam emitted by the navigational light marker(s) 1.1 and a second light beam constituted by the photons having a polarization state orthogonal to the polarization state of the light beam emitted by the navigational light marker(s) 1.1.

In a particular embodiment, the image acquiring device 1.2 further includes a field mask FM placed in the first image plane IP1 between the first L1 and second L2 converging lenses, which is adapted to size of the first and second images, as captured in the steps 2.2 and 2.3, in order to allow performing simultaneously both captures on a single Charge-Coupled Device (CCD) 3.1, while avoiding overlap on the CCD 3.1 of the first and second beams output by the Wollaston prism WP.

The image acquiring device 1.2 further includes the CCD 3.1. The CCD 3.1 is adapted to simultaneously capture the first and second light beams output by the Wollaston prism WP. Different kinds of image sensors may be implemented, according to the nature of the light beam emitted by the navigational light marker(s) 1.1. A colour or monochromatic silicon-based image sensor may be implemented for light beams in the visible spectrum. An Indium-Gallium-Arsenide (InGaAs)-based image sensor may be implemented for light beams in the very near infrared spectrum, whereas a Mercury-Cadmium-Telluride (HgCdTe)-based image sensor or a Quantum Well Infrared Photodetector (QWIP) may be implemented for light beams in the near infrared spectrum. Silicon-Carbide (SiC), Gallium-Nitride (GaN) or Aluminium-Gallium-Nitride (AlGaN)-based image sensor may be implemented for light beams in the near ultraviolet spectrum.

The image acquiring device 1.2 further includes a third converging lens L3 between the Wollaston prism WP and the CCD 3.1 used to form the image in a second image plane IP2 corresponding to the detector plane.

As already mentioned, alternative arrangements adapted to simultaneously capture the first and second images on distinct CCDs may be implemented. Other alternative arrangements adapted to sequentially capture the first and second images on a single CCD may be implemented. It should however be noted that simultaneously capturing the first and second images allows avoiding any influence of the temporal variations of the light intensity and ensuring a same noise distribution in the first and second images. Simultaneously capturing the first and second images allows obtaining a more responsive system, which is particularly suitable for real-time analysis.

The image acquiring device 1.2 may further include a quarter-wave plate 3.2, preferably placed just upstream of the Wollaston prism WP in order to receive the light beam in collimated form. The neutral axes (fast and slow axes) of the quarter-wave plate 3.2 and the polarizing splitting axes of the Wollaston prism WP shall form a 45 degrees angle. Implementing the quarter-wave plate 3.2 avoids any need for compensating the aircraft tilt in order to ensure alignment of the image acquiring device 1.2 with the direction of polarization of the light beam emitted by the navigational light marker(s) 1.1, provided the light beam emitted by the navigational light marker(s) 1.1 is circularly polarized.

The image acquiring device 1.2 may further include a filter F, preferably placed upstream of the first L1 and second L2 converging lenses. The filter F is adapted to limit the light beam input to the image acquiring device 1.2 to a spectrum band substantially matching the spectrum band of the light beam emitted by the navigational light marker(s) 1.1. It allows reducing the contribution of the ambient light when capturing the first and second images, and further allows reducing the influence of the dispersion inherent in the Wollaston prism WP (or, more generally, in the beam-splitting polarizer in use) when capturing the first and second images. Therefore, chromatic aberrations are reduced. Moreover, when the quarter-wave plate 3.2 is implemented, it allows reducing the influence of the defects of the quarter-wave plate 3.2 when the collimated light beam deviates from the nominal wavelength of the quarter-wave plate 3.2.

Fig. 4A schematically represents an arrangement of the navigational light marker(s) 1.1, in a particular embodiment of the present invention.

Visual Approach Slope Indicator (VASI) and Precision Approach Path Indicator (PAPI) systems in use in the domain of aircraft landing assistance rely on coloured navigational light markers.

Fig. 4B schematically represents an arrangement of prior art navigational light markers, for providing approach slope indications. A set 4.3 of four navigational light markers are typically placed at 300 meters from the beginning of the runway 4.4 and at 15 meters from a side of the runway 4.4, as shown in Fig. 4B. The four navigational light markers are placed along a line, perpendicular to the runway 4.4, and are spaced by 9 meters. When the aircraft pilot sees all the four navigational light markers in red colour, or three navigational light markers in red colour among the four navigational light markers, it means that the aircraft altitude is too low for landing in good conditions. When the aircraft pilot sees all the four navigational light markers in white colour, or three navigational light markers in white colour among the four navigational light markers, it means that the aircraft altitude is too high for landing in good conditions. When the aircraft pilot sees two navigational light markers in white colour and two navigational light markers in red colour among the four navigational light markers, it means that the aircraft altitude is correct for landing in good conditions. Actually, when the approach slope is greater than 3.5°, the aircraft pilot sees no navigational light markers in red colour and four navigational light markers in white colour; when the approach slope is lower than 3.5° and greater than 3.2°, the aircraft pilot sees only one navigational light marker in red colour and three navigational light markers in white colour; when the approach slope is substantially equal to 3°, *i.e.* between 2.8° and 3.2°, the aircraft pilot sees two navigational light markers in red colour and two navigational light markers in white colour; when the approach slope is lower than 2.8° and greater than 2.5°, the aircraft pilot sees only one navigational light marker in white colour and three navigational light markers in red colour; and, when the approach slope is lower than 2.5°, the aircraft pilot sees no navigational light markers in white colour and four navigational light markers in red colour.

As shown on Fig. 4A, the navigational light marker(s) 1.1 may be adapted to enable providing similar approach slope indications. In this case, at least one navigational light marker 1.1 generates a light beam, part of which being fully polarized in a circular right polarization state and another part of which being fully polarized in a circular left polarization state. Therefore, said navigational light marker 1.1 generates a light beam with two sectors 4.1 and 4.2, in which the light is polarized in an orthogonal manner. Linear or elliptic polarization may be implemented instead.

The boundary, which is substantially horizontal, between the two sectors 4.1 and 4.2 defines the optimal approach slope, *i.e.* at an angle of 3°. Thus, when the aircraft approach slope is in the upper sector 4.1, it means that the aircraft altitude is above the optimal altitude for optimal approach slope; and, when the aircraft approach slope is in the lower sector 4.2, it means that the aircraft altitude is below the optimal altitude for optimal approach slope. Such an indication may then be fed back to the aircraft pilot in the step 2.5 using distinct colours, such as white and red respectively. Using such orthogonal polarization states with a same light beam intensity implies a sign change, from the corresponding pixel intensity perspective in the polarimetric contrast image, when the approach slope crosses the boundary between the two sectors 4.1 and 4.2. The image acquiring device 1.2 is then adapted to detect the sign of the intensity in the polarimetric contrast image for each pixel and the image acquiring device 1.2 is further adapted to accordingly feed back, in the step 2.5, an approach slope indication.

In a particular embodiment of the present invention, the same principle is applied for providing an approach azimuth indication. In this case, the boundary, which is substantially vertical, between the two sectors defines the optimal approach azimuth.

## Claims

1. A system for performing navigation assistance in a scattering environment, **characterized in that**, said system being intended to detect at least one navigational light marker in scenes captured by an image capturing device, each navigational light marker generating a light beam having a predefined polarization state, said system includes an image capturing device that implements:

   - means for capturing a first image of a scene, said first image being polarized in accordance with the predefined polarization state of the light beam generated by said navigational light marker(s);
   - means for capturing a second image of the scene, said second image being polarized according to a polarization state orthogonal to the polarization state of the first image;
   - means for generating a polarimetric contrast image by combining the first and second captured images; and
   - means for providing a feedback for performing navigation assistance in the scattering environment, on the basis of the generated polarimetric contrast image.

2. The system according to claim 1, **characterized in that** said image capturing device includes:

   - first and second converging lenses adapted to re-collimate a light beam;
   - a beam-splitting polarizer adapted to split the re-collimated light beam into two resulting beams, a first resulting beam being polarized in accordance with the predefined polarization state of the light beam generated by said navigational light marker(s) and the second resulting beam being polarized according to a polarization state orthogonal to the polarization state of the first resulting beam; and
   - one or two image sensors adapted to image the first and second resulting beams.

3. The system according to claim 2, **characterized in that** said image capturing device includes a single image sensor and further includes a third converging lens adapted to enable imaging the first and second resulting beams on said single image sensor.

4. The system according to claim 3, **characterized in that**, the first and second converging lenses being adapted to form an image in a first image plane, said image capturing device includes a field mask in said first image plane.

5. The system according to any one of claims 2 to 4, **characterized in that** said image capturing device further includes, upstream of the first and second converging lenses, a filter adapted to limit the light beam input to the image acquiring device to a spectrum band substantially matching the spectrum band of the light beam emitted by the navigational light marker(s).

6. The system according to any one of claims 2 to 4, **characterized in that**, the light beam generated by the navigational light marker(s) being circularly polarized, said image capturing device further includes, upstream of the beam-splitting polarizer, a quarter-wave plate with fast and slow axes oriented at 45 degrees from splitting directions of the beam-splitting polarizer.

7. The system according to any one of claims 1 to 6, **characterized in that** said means for providing the feedback includes means for displaying the generated polarimetric contrast image.

8. The system according to any one of claims 1 to 6, **characterized in that** said means for providing the feedback includes:

   - means for comparing an intensity of each pixel of the generated polarimetric contrast image with a predetermined threshold;
   - means for generating another image in which each pixel has an intensity representative of whether the absolute value of the intensity of the same pixel in the polarimetric contrast image is above, or not, said predetermined threshold; and
   - means for displaying said generated another image.

9. The system according to any one of claims 1 to 6, **characterized in that** said means for providing the feedback includes:

   - means for applying a sliding window onto the generated polarimetric contrast image to detect pixel or groups of pixels that probably correspond to the presence of at least one navigational light marker in the scene;
   - means for determining a trust level representative of the probability that said pixels or groups of pixels effectively correspond to the presence of at least one navigational light marker in the scene; and
   - means for generating another image, by highlighting each pixel in association with its corresponding trust level, when said trust level is above a predetermined threshold.

10. The system according to any one of claims 1 to 9, **characterized in that** the image capturing device is adapted to successively capture several times the first image and successively capture several times the second image, and to consequently generate a time-sequence plurality of polarimetric contrast images from the plurality of captured first images and from the plurality of captured second images, and wherein the image acquiring device further includes:

   - means for detecting bright pixels, isolated in the time-sequence plurality of polarimetric contrast images;
   - means for obtaining one polarimetric contrast image from said plurality of polarimetric contrast images; and
   - means for replacing in the obtained polarimetric contrast image the isolated bright pixels, if any, by dummy pixels.

11. The system according to any one of claims 1 to 10, **characterized in that** combining the first and second captured images corresponds to subtracting an intensity of each pixel in the second image from an intensity of the corresponding pixel in the first image.

12. The system according to any one of claims 1 to 10, **characterized in that** combining the first and second captured images corresponds to subtracting an intensity of each pixel in the second image from an intensity of the corresponding pixel in the first image, the whole being then divided by the sum of the intensity of said pixel in the second image and the intensity of said corresponding pixel in the first image.

13. The system according to any one of claims 1 to 12, **characterized in that**, said system being adapted for aircraft landing assistance with at least four coplanar navigational light markers not aligned by three and having predefined positions, said means for providing a feedback are adapted to provide information about altitude and/or azimuth and/or approach slope, by implementing:

- means for selecting pixels or groups of pixels corresponding, in the polarimetric contrast image, to four navigational light markers; and
- means for determining said information about altitude and/or azimuth and/or approach slope on the basis of the positions of the selected pixels or groups of pixels in the polarimetric contrast image and on the basis of the predefined positions of the corresponding navigational light markers.

14. The system according to any one of claims 1 to 13, **characterized in that**, said system being adapted for aircraft landing assistance, said system further comprising said navigational light marker(s), said navigational light marker(s) are adapted to generate a light beam having a first sector polarized according to the predefined polarization state and a second sector polarized orthogonally to the first sector, and **in that** said means for providing the feedback are adapted to provide an approach slope information on the basis of a sign of the intensity of the pixels of the polarimetric contrast image.

15. A method for performing navigation assistance in a scattering environment, **characterized in that**, at least one navigational light marker generating a light beam having a predefined polarization state, an image capturing device adapted to detect said navigational light marker(s) in scenes captured by said image capturing device performs:

    - capturing a first image of a scene, said first image being polarized in accordance with the predefined polarization state of the light beam generated by said navigational light marker(s);
    - capturing a second image of the scene, said second image being polarized according to a polarization state orthogonal to the polarization state of the first image;
    - generating a polarimetric contrast image by combining the first and second captured images; and
    - providing a feedback for performing navigation assistance in the scattering environment, on the basis of the generated polarimetric contrast image.

1.3

1.1

1.2

Fig. 1

Activating at least one navigational light marker generating a fully polarized light beam having a predefined polarization state ⟩ 2.1

Capturing a first image of a scene in a scattering environment, said first image being polarized according to said predefined polarization state ⟩ 2.2

Capturing a second image of the scene in the scattering environment, said second image being polarized according to a polarization state orthogonal to said predefined polarization state ⟩ 2.3

Generating a polarimetric contrast image by combining the first and second images ⟩ 2.4

Generating a feedback representative of the presence or absence of the navigational light marker(s) in the scene ⟩ 2.5

Fig. 2

1.1

IP1                          IP2

F    L₁        L₂        L₃

FM

3.2

WP

I∥

I⊥

3.1

Fig. 3                    1.2

4.1

Fig. 4A

1.1

4.2

Fig. 4B

4.4

15m    9m

300m

4.3

Europäisches
Patentamt

European
Patent Office

Office européen
des brevets

# EUROPEAN SEARCH REPORT

Application Number

EP 14 30 5269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 146 428 A1 (ONERA [FR]; FRANCAISE CONVOYEURS SA [FR]) 26 June 1985 (1985-06-26) | 1,15 | INV. G01S1/70 G01S5/16 G08G5/02 |
| Y | * page 1, line 1 - page 6, line 15; figures 1-8 * <br> * page 7, line 36 - page 14, line 35 * <br> * page 13, lines 31-36 * | 2-6 | |
| Y | Arnaud Bénière ET AL: "Design and experimental validation of a snapshot polarization contrast imager", Applied optics, 20 October 2009 (2009-10-20), pages 5764-5773, XP055131975, United States DOI: 10.1364/AO.48.005764 Retrieved from the Internet: URL:http://www.ncbi.nlm.nih.gov/pubmed/19844313 * abstract *; figures 1-4 * * Section "1. Introduction" to Section "3. Basic Layout of Device" * | 2-6 | |
| A | DE 945 208 C (LICENTIA GMBH) 5 July 1956 (1956-07-05) * the whole document * | 1-6,15 | TECHNICAL FIELDS SEARCHED (IPC) G01S G08G |
| A | GB 1 335 197 A (PHILIPS ELECTRONIC ASSOCIATED) 24 October 1973 (1973-10-24) * page 2, line 122 - page 3, line 86 * | 6 | |

~~The present search report has been drawn up for all claims~~

| Place of search | Date of completion of the search | Examiner |
|---|---|---|
| Munich | 30 July 2014 | Zaneboni, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................

& : member of the same patent family, corresponding
document

EPO FORM 1503 03.82 (P04C01)

Europäisches
Patentamt

European
Patent Office

Office européen
des brevets

Application Number

EP 14 30 5269

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 14 30 5269

The Search Division considers that the present European patent application does not comply with the requirements of unity of invention and relates to several inventions or groups of inventions, namely:

1. claims: 1-6, 15

    System for performing navigation assistance using polarimetric contrast images with a polarising beam splitter
    ---

2. claims: 7-9

    System for performing navigation assistance using polarimetric contrast images providing feedback via displaying the polarimetric contrast image
    ---

3. claim: 10

    System for performing navigation assistance using polarimetric contrast images with means for detecting isolated bright pixels
    ---

4. claims: 11, 12

    System for performing navigation assistance using polarimetric contrast images with a normalisation step in the determination of the polarimetric contrast image.
    ---

5. claims: 13, 14

    System for performing navigation assistance for aircraft landing assistance
    ---

**ANNEX TO THE EUROPEAN SEARCH REPORT
ON EUROPEAN PATENT APPLICATION NO.**                   EP 14 30 5269

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2014

| Patent document cited in search report | | Publication date | Patent family member(s) | | Publication date |
|---|---|---|---|---|---|
| EP 0146428 | A1 | 26-06-1985 | DD | 228096 A5 | 02-10-1985 |
|  |  |  | EP | 0146428 A1 | 26-06-1985 |
|  |  |  | ES | 8603997 A1 | 16-05-1986 |
|  |  |  | FR | 2554612 A1 | 10-05-1985 |
|  |  |  | NO | 844335 A | 06-05-1985 |
| DE 945208 | C | 05-07-1956 | NONE | | |
| GB 1335197 | A | 24-10-1973 | BE | 759837 A1 | 03-06-1971 |
|  |  |  | CA | 924895 A1 | 24-04-1973 |
|  |  |  | CH | 532795 A | 15-01-1973 |
|  |  |  | DE | 2058418 A1 | 09-06-1971 |
|  |  |  | FR | 2074966 A5 | 08-10-1971 |
|  |  |  | GB | 1335197 A | 24-10-1973 |
|  |  |  | JP | S5124261 B1 | 22-07-1976 |
|  |  |  | NL | 6918301 A | 08-06-1971 |
|  |  |  | SE | 369970 B | 23-09-1974 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M.A. FISCHLER ; R.C. BOLLES.** Random Sample Consensus: A Paradigm for Model Fitting with Applications to Image Analysis and Automated Cartography. *Comm. Of the ACM,* 1981, vol. 24 (6), 381-395